(19) **Europäisches Patentamt / European Patent Office / Office européen des brevets**

(11) **EP 4 346 431 B1**

(12) **EUROPEAN PATENT SPECIFICATION**

(45) Date of publication and mention
of the grant of the patent:
**26.02.2025 Bulletin 2025/09**

(21) Application number: **22730460.7**

(22) Date of filing: **24.05.2022**

(51) International Patent Classification (IPC):
*A23J 3/14* (2006.01)    *A23J 3/22* (2006.01)
*A23L 5/43* (2016.01)    *A23L 11/00* (2025.01)
*A23L 13/00* (2016.01)    *A23L 13/40* (2023.01)

(52) Cooperative Patent Classification (CPC):
**A23J 3/14; A23J 3/227; A23L 5/43; A23L 11/01;
A23L 13/03; A23L 13/428**

(86) International application number:
**PCT/EP2022/064090**

(87) International publication number:
**WO 2022/253643 (08.12.2022 Gazette 2022/49)**

(54) **PLANT-BASED MEAT ALTERNATIVE PRODUCT WITH A MEAT-LIKE COLOR APPEARANCE**

PFLANZENBASIERTES FLEISCHALTERNATIVPRODUKT MIT FLEISCHÄHNLICHER FARBERSCHEINUNG

PRODUIT CARNÉ DE SUBSTITUTION D'ORIGINE VÉGÉTALE AYANT UNE APPARENCE DE COULEUR SEMBLABLE À LA VIANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.06.2021 US 202163195852 P
11.08.2021 EP 21190804**

(43) Date of publication of application:
**10.04.2024 Bulletin 2024/15**

(73) Proprietor: **Société des Produits Nestlé S.A.
1800 Vevey (CH)**

(72) Inventors:
• **EVANS, Cara, Colleen
Stow, Ohio 44224 (US)**

• **JIANG, Shanshan
Aurora, Ohio 44202 (US)**
• **FURBEE, Sandra
Hudson, Ohio 44236 (US)**

(74) Representative: **Dinger, Hansjörg
Société des Produits Nestlé S.A.
Avenue Nestlé 55
1800 Vevey (CH)**

(56) References cited:
EP-A1- 1 180 332        WO-A1-2011/008602
WO-A1-2021/072318       WO-A1-2021/078722
CN-A- 112 056 566       US-A1- 2020 093 167

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates generally to the field of nutrition and health. In particular, the present invention relates to meat analogue foods, for example to plant-based meat analogues. For example, the present invention relates to a meat analogue product comprising plant protein, a binder, and at least one colorant, wherein at least a part of the colorant is distributed on the surface of the raw meat analogue product so that the color difference $\Delta E_{2000}$ of the outside and inside of the meat analogue is at least 1.5.

Today's consumers demand more and more meat analogue products as substitutes for real meat-based products in their diets. Reasons for this trend vary from ecological, economical, ethical and more health-conscious considerations.

Typically, such meat analogue products are plant protein extrudates, which are mixed with binders, oil and fat and various colorings and flavorings. However, there are still many limitations as to product quality such as taste, texture and overall visual appearance. Today the trend is towards meat replacement products, which mimic raw meat, meaning that the consumer buys these products 'raw' and processes/cooks them in the kitchen in the same way as he would with a corresponding raw meat product. Hence, the consumer expects those meat analogue products also to behave in the same way as raw meat when it comes to the taste, texture, and appearance of those products during the preparation and transformation during a cooking process.

Several solutions exist today and are for example described in WO2015153666A1 and WO2017070303A1. With today's available meat alternative products, however, many limitations still exist and there is still a clear and persisting need in the art to improve the quality of such meat analogue products, as to taste, texture and particularly also to the visual aspects of such products, as to before, during and after the cooking process. A way to address these shortcomings is described in WO2021037574A1 which relates to a meat analogue product comprising hydrated textured plant protein which delivers a very beneficial meat-like texture of the meat analogue product. WO 2021/072318 A1 describes meat alternative composition comprising a plant based meat alternative including 0.1-14 wt.% binder, and 0.1-25 wt.% a fat source, and 4-42 wt.% a cranberry seed preparation.

A further feature that frequently distinguishes plant-based meat analogue products from meat-based products is the color of these products and the way the color changes during the cooking process.

Typically, the pinkish color of raw meat is mimicked in plant-based meat analogues by the addition of corresponding food colors to the plant-based composition. However, while the outside of such a colored plant-based meat analogue product, such as a plant-based burger patty or sausage, for example, turns brown during frying or grilling, the inside of the colored plant-based burger patty or sausage often maintains its pinkish or orangish color tone, while meat-based patties or sausages would turn grey-brown.

Hence, there is still in a need in the art to have available plant-based meat analogues that have a taste, texture, color scheme and cooking behaviour as similar as possible to their meat-based counterparts.

It would therefore be desirable to provide the art with a plant-based meat analogue with an outside color that resembles the color of the corresponding meat-based counterpart as closely as possible in raw state, in the cooked state and during the cooking process.

Any reference to prior art documents in this specification is not to be considered an admission that such prior art is widely known or forms part of the common general knowledge in the field.

The objective of the present invention was, hence, to improve or enrich the state of the art and in particular to provide a plant-based meat analogue that resembles the color of the corresponding meat product in the raw state, in the cooked state, and ideally also during the cooking process, or to at least provide a useful alternative.

The inventors were surprised to see that the objective of the present invention could be achieved by the subject matter of the independent claim. The dependent claims further develop the idea of the present invention.

Figure 1 shows plant-based burgers sprayed while frozen with solutions having various proportions of water, beetroot-derived color, fruit and vegetable derived brown color, and malt. Raw burgers are shown in the top row, while the bottom row as well as the stacked cross sections 1-4 are cooked burgers.

Figure 2 shows plant-based burgers that were sprayed with a solution of a colorant derived from red potato, before and after cooking.

Figure 3 shows plant-based burgers in which a colorant derived from red potato was incorporated throughout the burger at 0.35 wt%, before (left) and after (right) cooking.

Figure 4 shows raw (left) and cooked (right) patties made from 4% fat ground beef.

Figure 5 shows raw and cooked meat analogue and beef burgers. Red beet colorant was added to the meat analogue burgers either by dipping in a suspension of the colorant (left) or by incorporating the colorant directly within the mass of the burger at 0.35 wt% (center). For comparison, a raw and cooked patty of 4% fat ground beef are shown on the right.

Figure 6 shows plant-based burgers that were sprayed with solutions of beetroot-derived color when raw and unfrozen. A raw burger is shown on the left, and a cooked burger is on the right.

Accordingly, the present invention provides a meat analogue product comprising at least one colorant, wherein the colorant is distributed in the meat analogue product so that the outside of the meat analogue product resembles a corresponding raw meat product and the inside meat analogue product has a color resembling a cooked corresponding meat product. The outside of the meat analogue product will then change its color during the cooking process to resemble a cooked meat product.

Hence, the subject matter of the present invention relates to a meat analogue product comprising at least one colorant, wherein at least a part of the colorant is distributed on the surface of the meat analogue product so that the outside of the meat analogue product corresponds to a L*a*b* color of the CIELAB (L*a*b*) color space and differs from color in the inside of the meat analogue product by at least 2 units of $\Delta E_{2000}$.

Accordingly, the present invention relates to a meat analogue product comprising plant protein, a binder, and at least one colorant, wherein at least a part of the colorant is distributed on the surface of the meat analogue product so that the outside of the meat analogue product corresponds to a color of the CIELAB (L*a*b*) color space and differs from color in the inside of the meat analogue product by at least 1.5 units, preferably at least 2.0 units, and even more preferably at least 5.0 units of $\Delta E_{2000}$.

The meat analogue product may also comprise at least one flavorant.

$\Delta E_{2000}$ is defined according to the standard of the CEI, Commission Internationale de l'Eclairage (CIE Publication 142 (2001). Improvement to industrial color-difference evaluation. ISBN 3 901 906 08 8, CIE Central Bureau, Vienna).

Generally, a $\Delta E_{2000}$ value of 1 is taken as a threshold difference in color to allow visual detection (Martin Habekost, "Which color differencing equation should be used?" International Circular of Graphic Education And Research, 2013, 6, 20-33). As for individual parameters, a difference in L*, a*, or b* of about 0.4 - 0.7 is generally a threshold above which color differences are noticeable, and of > 5.0 for large color differences (M. Melgosa et al. "Colour Difference Evaluation," in C. Fernandez-Maloigne (ed.), Advanced Color Image Processing and Analysis, Springer Science + Business Media, New York, 2013, pp. 59-79).

CIELAB or L*a*b* is a color space defined by the International Commission on Illumination (abbreviated CIE) in 1976 (CIE Publication 15 (2004, 3rd ed). Colorimetry. ISBN 3 901 906 33 9, CIE Central Bureau, Vienna).

As used in this specification, the words "comprises", "comprising", and similar words, are not to be interpreted in an exclusive or exhaustive sense. In other words, they are intended to mean "including, but not limited to".

Hence, the inventors have achieved the objective of the present invention and in particular to provide a colored meat analogue product that closely resembles the color of meat-based products in the raw state, in the cooked stage, during cooking and during storage.

Consequently, the present invention relates in part to a meat analogue product comprising plant protein, a binder, optional flavorings and at least one colorant, wherein at least a part of the colorant is distributed on the surface of the meat analogue product so that the outside of the meat analogue product corresponds to a CIELAB (L*a*b*) color of the CIELAB color space and differs from color in the inside of the meat analogue product by at least 2 units of $\Delta E_{2000}$, where $\Delta E_{2000}$ is defined according to the standard of the CEI, Commission Internationale de l'Eclairage.[1]

The present inventors have shown that by applying color to the surface of the plant-based meat analogue product and less color or different colors in the interior of the plant-based meat analogue it was possible to use less color in the plant-based meat analogue product compared to the plant-based products where the color is uniformly distributed throughout the whole product.

Further, at least a part of the colorant may be distributed on at least a part of the surface of the meat analogue product. Applying the colorant to a part of the surface of the meat analogue product allows, for example, to introduce a message, a label or a pattern onto the surface of the plant-based product. In one embodiment, the colorant may be distributed on the whole surface of the meat analogue product allowing for an even coloring.

Cooking, frying or grilling a plant-based meat analogue product in accordance with the present invention with a colored outside or surface led to a color change on the surface during the heat application, while the uncolored or differently colored inside of the plant-based meat analogue product changed less in color. The absence of red or pink color inside the burger helped to avoid an unnatural pink color in the inside of the plant-based meat analogue product after heating it through.

Even further, the inventors were surprised to observe that a plant-based meat analogue product colored in accordance with the present invention changed its color with storage time in the chilled state from a pinkish fresh meat-like color to a more brownish or greyish color after longer storage, also resembling the behaviour of meat-based products.

In one preferred embodiment of the present invention, the meat analogue product does not comprise an ingredient from an animal origin. The product of the present invention may, hence, be a vegetarian or vegan food product.

"Meat analogue product", sometimes also called meat alternative, meat substitute, mock meat, faux meat, imitation meat or vegetarian meat, refers herein to a food product, exclusively made from vegetarian ingredients, and which has qualities as to mimic appearance, taste, flavor, and texture as the corresponding real meat product. Here the term "meat analogue product" may include but is not limited to beef analogues, bison analogues, pork analogues, chicken analogues, fish analogues, shellfish analogues, and goat analogues.

"Colorant" means an ingredient that is added and that changes the color of the product. This can be but is not limited to a food colorant, a coloring foodstuff, an extract, or a juice or puree. For example, a colorant may be an ingredient that is added for the purpose to change the color of the food or of a part of the food. Accordingly, a food colorant may be any dye, pigment, or substance that imparts color when it is added to food.

For example, the term "colorant" may mean in accordance with the definition of the European Food Safety Authority (EFSA) food additives which are added to foods mainly for the following reasons:

- to make up for color losses following exposure to light, air, moisture and variations in temperature
- to enhance naturally occurring colors
- to add color to foods that would otherwise be colorless or colored differently.

Further, for example, the term "colorant" may mean in accordance with the definition of the US Food and Drug Administration's (FDA) a color additive, that is as defined by regulation, any dye, pigment, or other substance that can impart color to a food, drug, or cosmetic or to the human body.

In accordance with Codex Alimentarius the term "food" may mean any substance, whether processed, semi-processed or raw, which is intended for human consumption, and includes drink, chewing gum and any substance which has been used in the manufacture, preparation or treatment of "food" but does not include cosmetics or tobacco or substances used only as drugs. For the purpose of the present invention the term food may also include petfood.

The plant protein may comprise or consist of textured plant protein. As it is described in WO2021037574A1, herein incorporated by reference, the use of textured plant protein in the meat analogue product may allow to produce a particular minced meat like texture if the textured plant protein is appropriately hydrated. "Textured plant protein" is referred in the literature also as 'texturized plant' or 'texturized vegetable protein' (TVP). It typically refers to a defatted plant protein flour, such as for example defatted soy flour, which is processed e.g., by extrusion into chunks or flakes. In one preferred embodiment of the present invention the meat analogue product comprises between 20 to 35wt% (weight percent of the total composition) of textured plant protein, preferably between 20 to 30wt%, preferably between 22 to 30wt%, preferably between 23 to 28wt% (weight percent of the total composition).

The term "raw" for the present invention means 'un-cooked'.

The term "hydrated" means that the textured plant protein is combined with water, which is absorbed by the textured plant protein. For clarification: A 100% hydrated textured plant protein is a textured plant protein, which is fully saturated with water, i.e. which cannot absorb any further water or any further other aqueous liquid. A 0% hydrated textured plant protein is a textured plant protein, which is absolutely dry and which does not contain any water or moisture. A 50% hydrated textured plant protein is a textured plant protein, which is combined and absorbed with 50% of the amount of water, which it could absorb, or for which it has the capacity to absorb. For the present invention, the capacity of a textured plant protein to absorb water or moisture is considered as being linear in the range from 0% to 100%.

In one preferred embodiment of the present invention, the textured plant protein is between 65 to 85% hydrated, preferably between 67 to 83%, preferably between 70 to 80% hydrated. In an embodiment of the present invention, 15 to 35% of the textured plant protein is not hydrated, preferably 17 to 33%, preferably 20 to 30% is not hydrated. The hydration is determined for the final product.

The term "flavorings" according to this invention means ingredients selected from the group consisting of salt, sugar, vinegar, yeast extract, vegetable powder, bacterial extract, vegetable extract, reaction flavor, hydrolyzed plant protein, acid, garnishes, herbs, spices or combinations of these. The meat analogue product according to the invention comprise 0 to 10% flavorings, preferably 0.5 to 10%, preferably 0.5 to 7%, preferably 0.5 to 5%, preferably 1 to 10%, preferably 1 to 5% (by weight of the composition). A bacterial extract is described within WO2009040150 or WO2010105842. A vegetable extract is described within WO2013092296. Vegetable powder means at least one ingredient of onion powder, garlic powder, tomato powder, celery root powder or a combination thereof. Garnishes, herbs, spices or a combination thereof are selected from the group comprising pieces of parsley, celery, fenugreek, lovage, rosemary, marjoram, dill, tarragon, coriander, ginger, lemongrass, curcuma, chili, ginger, paprika, mustard, garlic, onion, turmeric, tomato, coconut milk, cheese, oregano, thyme, basil, chilies, paprika, pimento, jalapeno pepper, white pepper powder and black pepper or combinations of these.

The meat analogue product in accordance with the present invention may be any product resembling meat-based product. Preferably the meat analogue product in accordance with the present invention may be any meat analogue product resembling a meat-based product which may comprise or consist of minced meat brought into a form, such as a burger patty, for example, but which is not minced meat itself, such a minced meat for a Bolognese sauce. For example, the meat analogue product may be a burger patty, a ball, a nugget, or a sausage.

Preferably, the meat analogue product of the present invention is raw, meaning that the product was not cooked during its process of manufacture. After manufacture, the meat analogue product in accordance with the present invention may be frozen or chilled. Chilling or freezing the product of the present invention increases product safety and allows longer storage times during transport and distribution, for example.

The meat analogue product in accordance with the present invention may be prepared for consumption in the same way as the corresponding meat-based product. This has, for example, the advantage that consumers perceive this product as a true analogue without the need to learn new preparation techniques. For example, the meat analogue product may be for pan frying, grilling, oven baking, roasting, or air frying. With respect to color change during heating the inventors have obtained a particular uniform color change when the product was pan fried. Hence, in a preferred embodiment the product of the present invention is for pan frying.

The meat analogue product in accordance with the present invention may be colored with any color accepted for food that allows to resemble the meat color. It may even be colored with ingredients that are not official colorants in the regulatory sense but that nevertheless impart color (e.g., carrot juice or beet juice). For example, the color may be a red and/or brown color composition. Preferably, the color is a natural color. For example, the colorant may be selected from bell pepper, beetroot, carrot, black current, malted barley powder or a combination thereof. In one embodiment of the present invention the meat analogue product comprises between 0.01 to 5wt% (weight percent of the total composition) of colorants, preferably between 0.01 to 1 wt% (weight percent of the total composition).

In a preferred embodiment the color may be selected from the group consisting of fruit-based colorants, vegetable derived colorants, malt-based colorants, caramel based colorants, and combinations thereof. In a particularly preferred embodiment, the color may a beetroot-based colorant.

For example, the composition of the at least one colorant is red and/or brown and comprises colorants derived from beet, carrot, potato, sweet potato, radish, caramel, molasses, malt, apple, hibiscus, currant, elderberry, green tea, coffee, tea, raspberry, strawberry, algae, mushroom, fungi, turmeric, paprika, rose, marigold or combinations thereof.

The meat analogue product in accordance with the present is characterized in that its surface is coated at least partially with a colorant, so that the distribution of that colorant throughout the burger is inhomogeneous. Advantageously, more colorant is applied to the surface of the meat analogue product than what would be achieved, if the color was evenly distributed throughout the composition. For example, at least 25 weight-%, at least 35 weight-%, at least 45 weight-%, at least 55 weight-%, at least 65 weight-%, or at least 75 weight-% of the at least one colorant are coating the outer surface of the meat analogue product. The rest of the colorant, if any, may be incorporated throughout the inside of the meat analogue product. For example, a burger could be prepared so that 25% of a beetroot-derived color is in the inside, and the other 75% of the beetroot-derived color is sprayed on the outside of the burger.

The colorant may be applied to the outer surface of the meat analogue product by any method known in the art. For example, the colorant may be applied to the outer surface of the meat analogue product by spraying, by brushing, by a waterfall color application, by enrobing, or by dipping the meat analogue product into a color solution. In an embodiment the colorant is an emulsion or encapsulated in an emulsion, preferably an emulsion.

In one other embodiment of the present invention, the plant protein of the meat analogue product may be selected from soy bean protein, pea protein, lentil protein, lupin bean protein, wheat gluten, or a combination thereof. Further appropriate protein sources may be proteins from beans such as green, red or black beans, chickpeas, fava beans, spirulina, or from chia, quinoa or hemp seeds.

The meat analogue product may have a ratio of total water versus plant protein between about 2.25 to 2.75, preferably between about 2.3 to 2.5.

In one embodiment of the present invention, the binder of the meat analogue product comprises a cellulose, a fibre, a gelatinized starch, an un-textured protein isolate, or a combination thereof. For example, the binder may be methyl cellulose.

The meat analogue product may further comprise vegetable fat. In one embodiment of the present invention, the vegetable fat may be selected from coconut fat, palm fat, shea butter, or a combination thereof. In a preferred embodiment of the present invention, the fat may have an average particle size of 0.5-4.5mm. In a more preferred embodiment of the present invention, the fat particles may have an average particle size of 1-3mm. The presence of those particles significantly helps to improve the forming of the visual aspect of the marbled meat analogue product. "Average particle size" is defined herein as meaning that 90% of all particles of a batch of particles fall within a particular defined size range in [mm]. The size of the particles was herein determined by sieving through appropriate sieves or a mesh.

The vegetable fat may be a vegetable oil selected from rapeseed oil, for example canola oil; sunflower oil; cotton seed oil; peanut oil; soya oil; olive oil; coconut oil; algal oil; safflower oil; corn oil; rice bran oil; sesame oil; hazelnut oil; avocado oil; almond oil; walnut oil or a combination thereof. For example, the vegetable oil may be canola oil.

In one embodiment of the present invention, the meat analogue product may be a burger patty. Such plant-based burger patties are well-known in the art and sold, for example, under the brand GARDEN GOURMET®. For example, the meat analogue product may comprise rehydrated soy protein, water, plant-based oil, rehydrated wheat protein, plant-based acids, salt, and flavorings.

In accordance with the present invention the meat analogue product may have in the raw state a raw meat-like pinkish appearance on the outside and a greyish-brown cooked meat-like appearance in the inside of the product.

For consumers that prefer meat alternative products that resemble medium or medium rare meat products, the meat analogue product in accordance with the present invention can be adapted accordingly. For example, the meat analogue product in accordance with the present invention may have in the raw state a raw meat-like pinkish appearance on the outside and a reddish-brown medium or medium-rare cooked meat-like appearance on the inside of the product.

The present invention further pertains to a process for the preparation of a meat analogue product in accordance with the present invention comprising a plant protein, a binder, at least one colorant, and optionally a flavor, the process comprising the steps of: a) mixing the plant protein with water; b) adding the binder, the optional flavor and optionally a part of the colorants, and further mixing to a mass; c) optionally cooling the mass and adding grinded fat, and further mixing; wherein the textured plant protein is hydrated between 65 to 85%, preferably between 70-80%, in the meat analogue product; d) forming the meat analogue product and e) applying at least a part of the colorant to at least a part of the surface of the meat analogue product.

For example, the resulting meat analogue product may be chilled or frozen.

Remarkably, the inventors have found that step e) of the process of the present invention may be carried out after freezing the meat analogue product.

Those skilled in the art will understand that they can freely combine all features of the present invention disclosed herein. In particular, features described for the product of the present invention may be combined with the process of the present invention and vice versa. Further, features described for different embodiments of the present invention may be combined.

Although the invention has been described by way of example, it should be appreciated that variations and modifications may be made without departing from the scope of the invention as defined in the claims.

Furthermore, where known equivalents exist to specific features, such equivalents are incorporated as if specifically referred in this specification. Further advantages and features of the present invention are apparent from the figures and non-limiting examples.

Examples:

**Example 1:** Beetroot-derived color

900 g water, 100 g coconut oil, 50 g canola oil, 15 g methyl cellulose, 15 g vinegar, 15 g cornstarch, 4 g malt, 2 g beet root color, and 2 g vegetable derived brown color were mixed and used to hydrate 320 g of soy protein. After the mass was mixed, patties of 113 g each were formed and frozen.

Water, malt, beet root color, and fruit and vegetable derived brown color were mixed in varying proportions so as to give a color resembling that of fresh ground beef. The solutions were sprayed on the frozen patties using a pump-activated spray bottle. One side of the patties and the circumference were sprayed with the solution, then the patties were put back in the freezer until the coating was frozen. The burgers were then flipped over, and the spraying process was repeated to coat the second flat side. The patties were placed in the freezer again to solidify the coating.

Burgers were cooked from frozen by frying over medium heat on a nonstick skillet that had been sprayed with oil. The patties were flipped occasionally during cooking. Heating was continued until the interior of the burger reached 165 °F.

Images of the burgers were taken using $D_{65}$ illumination and diffuse light using a DigiEye (VeriVide). CIELAB values were determined from the images.

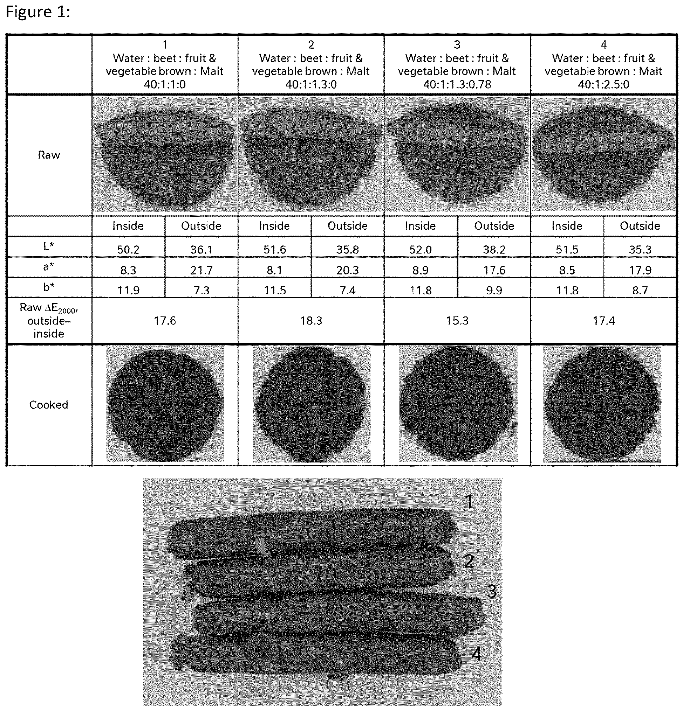

Photographs of the raw and cooked burgers are shown in Figure 1. The surface as well as the cross section of the raw burgers are shown. After spraying, the color contrast between the surface of the raw burger and the inside as measured by $\Delta E_{2000}$ ranged from 15-18; the contrast was great enough to be clearly visible. The cross sections of the cooked patties are shown in the photograph below the table, with numbers 1-4 corresponding to the sample numbers given in the table. The raw burgers had a reddish brown exterior similar to raw ground beef, and the cooked patties had a seared brown exterior and lighter brown interior that resembled cooked ground beef in color.

**Example 2:** Red potato color; cooking methods; color sprayed on vs. incorporated in burger

Burgers were prepared and frozen as in Example 1.

The frozen burgers were sprayed on the top and sides with a solution of water and red potato derived color (40: 0.5 water : colorant w:w). After the solution froze, the burgers were flipped over, and the spraying process was repeated to coat the second flat side. The patties were placed in the freezer again to solidify the coating.

The burgers were weighed before and after coating. The amount of solution frozen onto the burgers varied from 7-60 mg / cm$^2$ of surface area, generally being about 7-30 mg / cm$^2$ of surface area. When a raw, sprayed burger was cut in half and CIELAB values were measured of the burger surface and cross section, the values measured were

Surface (exterior):

$$L^* = 37.9; a^* = 16.9; b^* = 5.4$$

Cross section (interior):

$$L^* = 58.8; a^* = 6.9; b^* = 11.5$$

The $\Delta E_{2000}$ for the color difference between the surface and the cross section was 23.4, enough to give a clear visual difference in color between the inside and the outside.

Frozen burgers were cooked as in example 1. In addition to cooking on a nonstick pan, other sprayed and frozen burgers were cooked on an electric griddle sprayed with oil, a grill, a double-sided grill, and in an oven set at 350 °F. All burgers except the one on the double-sided grill were flipped during cooking. Heating continued until the interior of the burger reached 165 °F.

A second set of burgers was prepared as in example 1, but this time 5 g of a red potato-derived colorant was added in the hydration step. No color was sprayed onto the burgers. 113 g patties were formed and frozen. They were then cooked from frozen and data was recorded as in example 1.

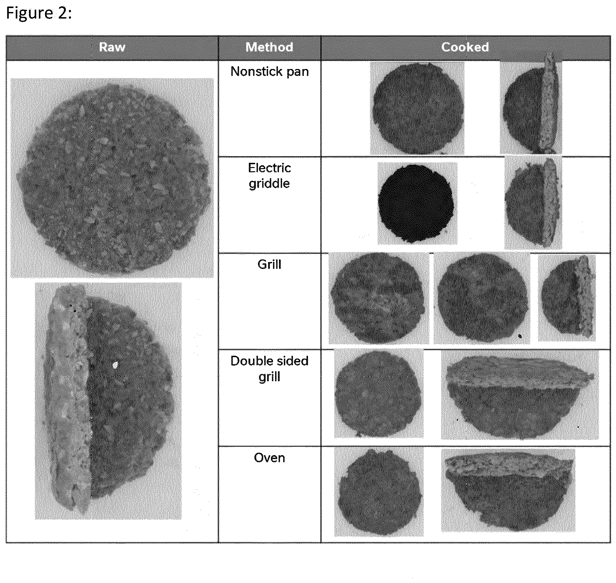

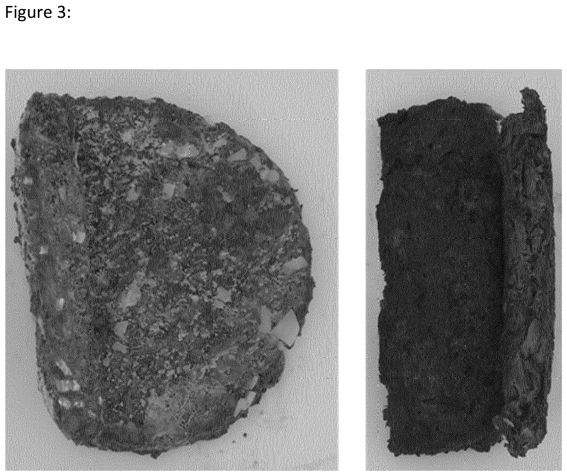

Photographs of the burgers that had been sprayed with the red potato solution are shown in figure 2, and the burgers in which the colorant was instead incorporated through the entire mass are shown in figure 3. For comparison, burgers made of 4% fat ground beef are shown in figure 4. Pickup weights, CIELAB values, and $\Delta E_{2000}$ relative to 4% fat ground beef are presented in table 1 (raw burgers) and table 2 (cooked burgers).

First comparison will be made of the raw meat analogue burgers, with the colorant sprayed on or incorporated, relative to a beef burger. This is a significant comparison since many consumers of meat analogues expect the products to resemble beef. This is particularly true when the products are purchased; consumers look for patties that have a color on the outside that resembles that of a ground beef hamburger. Since preformed patties are generally cooked as purchased, consumers rarely see the inside of the burgers, and so the color inside is less important. In the example shown here, the outside surface of the raw burgers had a color that was closer to that of ground beef when the burgers were sprayed than when the color was incorporated ($\Delta E_{2000}$ relative to ground beef was lower, 8.4 vs. 16.7). An even closer match to ground beef could be possible by blending or tailoring the mixture of colorants that is sprayed on the surface. Here only one colorant was used, at one concentration.

In contrast to the raw burgers, for cooked burgers the inside (cross section) color is frequently a significant parameter for consumer acceptance. Consumers generally expect the color to behave similarly to that of beef burgers, which turn from pink to brownish gray with further cooking. This color progression is frequently taken as an indication of doneness. Thus, burgers which remain pink in the cross section might be deemed insufficiently cooked by consumers, who might continue cooking until the burgers become overdone and dry. In the case of the example shown here, regardless of the cooking method the color of the interior of the burgers resembled that of the ground beef patty much more when the red potato colorant had been sprayed onto the burger. When color was instead incorporated at 0.35% inside the burger, the cross section failed to turn brown gray but had elements of pink and purple after cooking. For example, when cooked on nonstick-coated pans, $\Delta E_{2000}$ relative to ground beef was much lower when the color was sprayed than when incorporated in the matrix (1.6 < 27.4). a*, a measure of redness, was also lower and closer to the level of cooked ground beef when the color was sprayed than when incorporated (7.8 < 12.6). Regardless of cooking method, the samples with red potato colorant sprayed on the burgers had a seared outside and cooked color that more closely resembled that of ground beef than the sample with red potato colorant incorporated inside.

Table 1. CIELAB values and $\Delta E_{2000}$ relative to 4% fat ground beef for burgers with red potato colorant sprayed on the outside only or incorporated inside the patty, for raw burgers.

| | Raw outside | | | | Raw inside | | | |
|---|---|---|---|---|---|---|---|---|
| | L* | a* | b* | $\Delta E_{2000}$ (vs. 96/4 Ground beef) | L* | a* | b* | $\Delta E_{2000}$ (vs. 96/4 Ground beef) |
| 96 / 4 ground beef | 43.0 | 27.6 | 14.1 | | 42.4 | 27.3 | 13.8 | |
| Burger sprayed with Red Potato solution | 37.9 | 16.9 | 5.4 | 8.4 | 58.8 | 6.9 | 11.5 | 21.6 |
| Burger with 0.3% red potato inside | 44.98 | 6.04 | -1.56 | 16.7 | 42.83 | 11.13 | -2.95 | 13.9 |

Table 2. CIELAB values and $\Delta E_{2000}$ relative to 4% fat ground beef for burgers with red potato colorant sprayed on the outside only or incorporated inside the patty, for cooked burgers.

| | | Pickup weight mg / cm2 of surface area | Cooked outside | | | | Cooked inside | | | |
|---|---|---|---|---|---|---|---|---|---|---|
| | Cooking method | | L* | a* | b* | $\Delta E_{2000}$ (vs. 96/4 Ground beef) | L* | a* | b* | $\Delta E_{2000}$ (vs. 96/4 Ground beef) |
| 96 / 4 ground beef | Nonstick pan | | 28.6 | 12.4 | 11.0 | | 51.6 | 9.4 | 16.0 | |
| Burger sprayed with Red Potato solution | Nonstick pan | 7.9 | 28.9 | 11.6 | 8.7 | 1.6 | 51.0 | 7.8 | 15.1 | 1.6 |
| | Electric griddle | 8.9 | 33.1 | 12.9 | 14.2 | 4.1 | 51.2 | 8.5 | 15.1 | 0.9 |
| | Grill | 7.4 | 33.8 | 10.9 | 11.5 | 4.4 | 49.5 | 9.1 | 15.6 | 2.1 |
| | Double sided grill | 8.9 | 39.5 | 11.3 | 16.7 | 9.9 | 51.6 | 8.6 | 14.9 | 0.8 |
| | Oven | 8.4 | 34.1 | 10.4 | 7.6 | 5.0 | 49.0 | 8.5 | 14.6 | 2.8 |
| Burger with 0.3% red potato inside | Nonstick pan | | 20.2 | 6.3 | -0.7 | 29.0 | 26.3 | 12.6 | -4.9 | 27.4 |

**Example 3:** Dipping

In addition to spraying, other methods were explored for applying color. Burgers were prepared and frozen as in example 1. A suspension of 3.6 wt% beetroot-derived colorant was prepared in water. Frozen burgers were submerged briefly in the solution, the excess was allowed to drip off, and the burgers were placed back into the freezer. The pickup weight of the solution on the burger was 23.7 mg/cm$^2$ of surface area, about twice that usually observed when the solution was sprayed on instead. The dipped burgers were cooked from frozen and data was recorded as in example 1. The $\Delta E_{2000}$ for the color difference between the surface and the cross section was 23.8, enough to give a clear visual difference between the surface and interior.

A second set of burgers was prepared as in example 1, but this time 5 g of the beet-derived colorant was added in the hydration step (0.35 wt%). This level of addition was chosen because it gave a coloration resembling that of raw ground beef. No color was sprayed onto the burgers. The 113 g patties were formed and frozen.

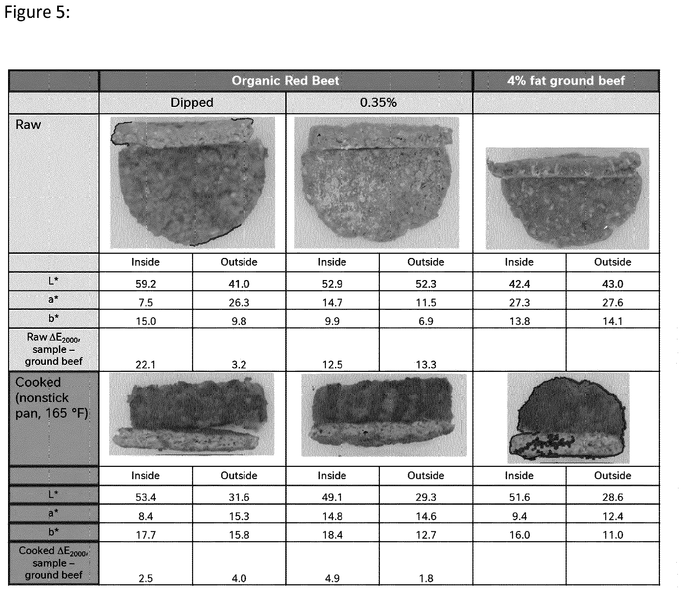

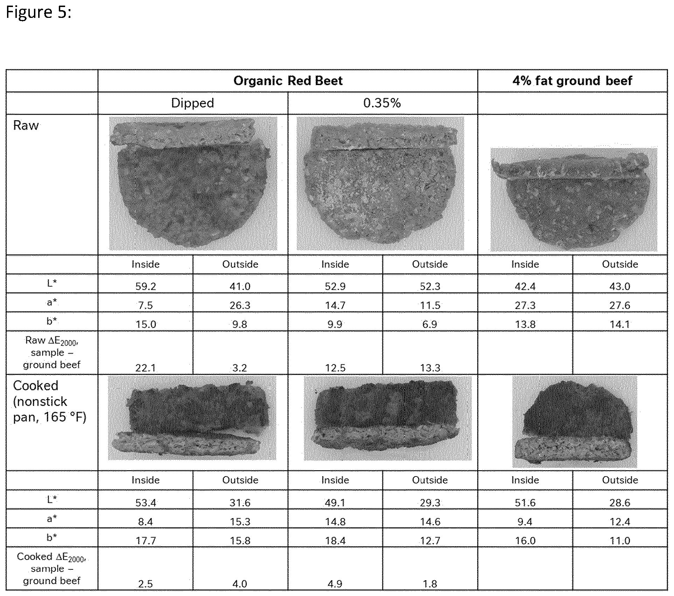

Raw and cooked patties of the burgers that were sprayed or had the beetroot color directly incorporated are shown on the left and center of figure 5 below. For comparison, a raw and cooked patty of 4% fat ground beef is also shown on the right of the same figure. The values of CIELAB and $\Delta E_{2000}$ relative to the ground beef patty for the surface and inside cross section of the burger are also indicated. The inside of the raw burgers resembled ground beef more closely when the beet was incorporated in the burger rather than sprayed on ($\Delta E_{2000}$ 12.5 vs 22.1). However, the surface of the patty, which is the only part seen by consumers when prepared patties are purchased, was closer in color to ground beef when the patty was dipped ($\Delta E_{2000}$ 3.2 vs 13.3; a* 26.3 vs. 11.5 when a* ground beef = 27.6).

When cooked, the spray coated burger had an inside and outside color that was somewhat similar to ground beef. Note that after cooking the inside of the coated burger was less red and more similar to ground beef than when the beet colorant was incorporated inside; a* and $\Delta E_{2000}$ relative to ground beef of the inside of the sprayed burger were 8.4 and 2.5, respectively, while these values were instead 14.8 and 4.9 for the inside of the beet-incorporated burger. The less red seen in the sprayed burger is significant, since a consumer would likely judge it to be more well cooked than the burger containing the beetroot colorant on the inside, which remained visibly pink. This therefore demonstrates one of the advantages of the approach claimed, of coating the outside of meat analogue products with colorant.

**Example 4:** Spraying refrigerated burgers

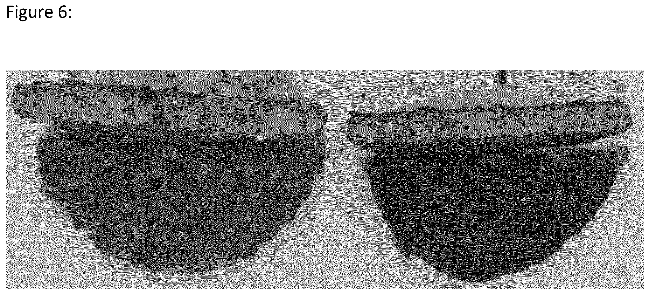

Color can be applied to the outside of burgers when not frozen. Burgers were prepared as in example 1. A burger that had never been frozen was sprayed with a 1:1 (w:w) solution of water and beetroot-derived color. The burger was then flipped and the other side and circumference were sprayed with the same mixture. The mass was recorded before and after spraying to calculate pickup weight, 10.4 mg/cm$^2$ of surface area. This is similar to pickup weights that had been recorded when the burgers were frozen when sprayed. The coated raw, nonfrozen burger was cooked and data was recorded as in example 1. Figure 6 shows sprayed burgers that were raw (left) or cooked (right). The $\Delta E_{2000}$ for the color difference between the surface and the cross section of the raw burger was 31.7.

**Example 5:** Water-in-oil emulsion

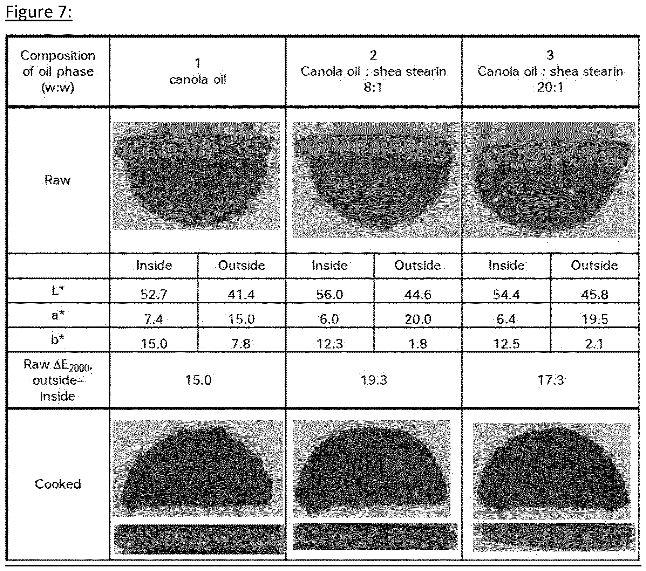

Color can be applied in an emulsion. Burgers were prepared as in example 1. Once the burgers were frozen, an emulsion was prepared by dispersing a water-based, beetroot-derived color in canola oil. 4 g of beetroot colorant and 4 g of a brown, vegetable-derived aqueous colorant were added to 200 g of canola oil and emulsified using high shear. The emulsion was then sprayed onto both sides of the frozen burger. The mass was recorded before and after spraying to calculate pickup weight, 36.0 mg/cm$^2$ of surface area. The coated raw, nonfrozen burger was cooked and data was recorded as in example 1. Two other emulsions in which the oil phase comprised shea stearin and canola oil (in a ratio of either 1:8 or 1:20) were also prepared and used to coat burgers. Figure 7 shows sprayed burgers that were raw (top) or cooked (bottom). The $\Delta E_{2000}$ for the color difference between the surface and the cross section of the raw burger ranged from 15.0 - 19.3, depending on the sample.

**Claims**

1. A meat analogue product comprising plant protein, a binder, and at least one colorant, wherein at least a part of the colorant is distributed on the surface of the meat analogue product so that the outside of the meat analogue product corresponds to a color of the CIELAB (L*a*b*) color space and differs from color in the inside of the meat analogue product by at least 1.5 units, preferably at least 2.0 units, and even more preferably at least 5.0 units of $\Delta E_{2000}$.

2. The meat analogue product in accordance with claim 1, wherein the meat analogue product is a burger patty, a ball, a nugget, a filet, a sausage, and/or a minced product.

3. The meat analogue product in accordance with one of the preceding claims, wherein the meat analogue product is frozen or chilled.

4. The meat analogue product in accordance with one of the preceding claims, wherein the meat analogue product is for pan frying, grilling, roasting, oven baking, or air frying, preferably pan frying.

5. The meat analogue product in accordance with one of the preceding claims, wherein the at least one colorant is a beetroot-based colorant.

6. The meat analogue product in accordance with one of the preceding claims, wherein the composition of the at least one colorant is red and/or brown and comprises colorants derived from beet, carrot, radish, annatto, potato, sweet potato, tomato, pepper, caramel, safflower, red cabbage, molasses, malt, apple, hibiscus, black or red currant, blueberry, green tea, black tea, coffee, grapeseed, elderberry, cranberry, pomegranate, blackberry, black or red raspberry, strawberry, algae, mushroom, fungi, turmeric, paprika, rose, marigold or combinations thereof.

7. The meat analogue product in accordance with one of the preceding claims, wherein at least 25 weight-% of the at least one colorant is coating the outer surface of the meat analogue product.

8. The meat analogue product in accordance with one of the preceding claims, wherein the colorant was applied to the outer surface of the meat analogue product by spraying, by misting, by a waterfall color application, by enrobing, or by dipping the meat analogue product into a color solution.

9. The meat analogue product in accordance with one of the preceding claims, wherein the plant protein is selected from soy bean protein, pea protein, lentil protein, lupin bean protein, wheat gluten, or a combination thereof.

10. The meat analogue product according to one of the preceding claims, wherein the meat analogue product has a ratio of total water versus plant protein between about 2.25 to 2.75, preferably between about 2.3 to 2.5.

11. The meat analogue product according to one of the preceding claims, wherein the binder comprises a cellulose, a fiber, a gelatinized starch, an un-textured protein isolate, or a combination thereof.

12. The meat analogue product according to one of the preceding claims, wherein the meat analogue product further comprises vegetable fat.

13. The meat analogue product according to one of the preceding claims, wherein the meat analogue product comprises rehydrated soy protein, water, plant-based oil, and rehydrated wheat protein, plant-based acids, salt, and flavorings.

14. The meat analogue product according to one of the preceding claims, wherein the meat analogue product has in the raw state a raw meat-like pinkish appearance on the outside and a greyish-brown cooked meat-like appearance on the inside of the product.

15. Process for the preparation of a meat analogue product in accordance with one of claims 1 - 14, the process comprising the steps of:

a. mixing the plant protein with water;
b. adding the binder, the optional flavor and optionally a part of the colorants, and further mixing to a mass;
c. optionally cooling the mass and adding grinded fat, and further mixing; wherein the plant protein is hydrated between 65 to 85%, preferably between 70-80%, in the meat analogue product;
d. forming the meat analogue product; and
e. applying at least a part of the colorant to at least a part of the surface of the meat analogue product.

**Patentansprüche**

1. Fleischersatzprodukt, umfassend Pflanzenprotein, ein Bindemittel und mindestens einen Farbstoff, wobei mindestens ein Teil des Farbstoffs auf der Oberfläche des Fleischersatzprodukts verteilt ist, sodass das Äußere des Fleischersatzprodukts einer Farbe des CIELAB-Farbraums (L*a*b*-Farbraums) entspricht und sich von der Farbe in dem Inneren des Fleischersatzprodukts um mindestens 1,5 Einheiten, vorzugsweise mindestens 2,0 Einheiten und noch mehr bevorzugt mindestens 5,0 Einheiten von $\Delta E_{2000}$ unterscheidet.

2. Fleischersatzprodukt nach Anspruch 1, wobei das Fleischersatzprodukt ein Burger-Patty, ein Ball, ein Nugget, ein Filet, eine Wurst und/oder ein Hackprodukt ist.

3. Fleischersatzprodukt nach einem der vorstehenden Ansprüche, wobei das Fleischersatzprodukt gefroren oder gekühlt ist.

4. Fleischersatzprodukt nach einem der vorstehenden Ansprüche, wobei das Fleischersatzprodukt zum Braten in der Pfanne, Grillen, Rösten, Backen im Ofen oder Heißluftfrittieren, vorzugsweise zum Braten in der Pfanne, bestimmt ist.

5. Fleischersatzprodukt nach einem der vorstehenden Ansprüche, wobei der mindestens eine Farbstoff ein auf Rote Bete basierender Farbstoff ist.

6. Fleischersatzprodukt nach einem der vorstehenden Ansprüche, wobei die Zusammensetzung des mindestens einen Farbstoffs rot und/oder braun ist und Farbstoffe umfasst, die aus Rüben, Karotten, Radieschen, Annatto, Kartoffeln, Süßkartoffeln, Tomaten, Pfeffer, Karamell, Saflor, Rotkohl, Melasse, Malz, Äpfeln, Hibiskus, schwarzen oder roten Johannisbeeren, Heidelbeeren, grünem Tee, schwarzem Tee, Kaffee, Traubenkernen, Holunderbeeren, Preiselbeeren, Granatapfel, Brombeeren, schwarzen oder roten Himbeeren, Erdbeeren, Algen, Pilzen, Kurkuma, Paprika, Rosen, Ringelblumen oder Kombinationen davon stammen.

7. Fleischersatzprodukt nach einem der vorstehenden Ansprüche, wobei mindestens 25 Gewichtsprozent des mindestens einen Farbstoffs die äußere Oberfläche des Fleischersatzprodukts bedecken.

8. Fleischersatzprodukt nach einem der vorstehenden Ansprüche, wobei der Farbstoff durch Sprühen, durch Vernebeln, durch einen Wasserfallfarbauftrag, durch Überziehen oder durch Eintauchen des Fleischersatzprodukts in eine Farblösung auf die Außenoberfläche des Fleischersatzprodukts aufgetragen wurde.

9. Fleischersatzprodukt nach einem der vorstehenden Ansprüche, wobei das Pflanzenprotein aus Sojabohnenprotein, Erbsenprotein, Linsenprotein, Lupinbohnenprotein, Weizengluten oder einer Kombination davon ausgewählt ist.

10. Fleischersatzprodukt nach einem der vorstehenden Ansprüche, wobei das Fleischersatzprodukt ein Verhältnis von Gesamtwasser zu Pflanzenprotein zwischen etwa 2,25 und 2,75, vorzugsweise zwischen etwa 2,3 und 2,5 aufweist.

11. Fleischersatzprodukt nach einem der vorstehenden Ansprüche, wobei das Bindemittel eine Cellulose, eine Faser, eine gelatinierte Stärke, ein nicht texturiertes Proteinisolat oder eine Kombination davon umfasst.

12. Fleischersatzprodukt nach einem der vorstehenden Ansprüche, wobei das Fleischersatzprodukt ferner Pflanzenfett umfasst.

13. Fleischersatzprodukt nach einem der vorstehenden Ansprüche, wobei das Fleischersatzprodukt rehydratisiertes Sojaprotein, Wasser, pflanzliches Öl und rehydratisiertes Weizenprotein, pflanzliche Säuren, Salz und Aromen umfasst.

14. Fleischersatzprodukt nach einem der vorstehenden Ansprüche, wobei das Fleischersatzprodukt in dem rohen Zustand äußerlich ein rohfleischähnliches rosafarbenes Aussehen und im Inneren des Produkts ein graubraunes, gekochtes fleischähnliches Aussehen aufweist.

15. Verfahren für die Herstellung eines Fleischersatzprodukts nach einem der Ansprüche 1 bis 14, das Verfahren umfassend die Schritte:

a. Mischen des Pflanzenproteins mit Wasser;
b. Zugeben des Bindemittels, des optionalen Aromas und optional eines Teils der Farbstoffe und weiter Mischen zu einer Masse;
c. optional Abkühlen der Masse und Zugeben von gemahlenem Fett und weiter Mischen; wobei das Pflanzenprotein in dem Fleischersatzprodukt zu 65 bis 85 %, vorzugsweise zu 70-80 % hydratisiert ist;
d. Formen des Fleischersatzprodukts; und
e. Auftragen von mindestens einem Teil des Farbstoffs auf mindestens einen Teil der Oberfläche des Fleischersatzprodukts.

**Revendications**

1. Produit analogue de viande comprenant une protéine végétale, un liant et au moins un colorant, dans lequel au moins une partie du colorant est répartie sur la surface du produit analogue de viande de sorte que l'extérieur du produit analogue de viande corresponde à une couleur de l'espace colorimétrique CIELAB (L*a*b*) et diffère de la couleur à l'intérieur du produit analogue de viande d'au moins 1,5 unité, de préférence d'au moins 2,0 unités, et encore plus préférablement d'au moins 5,0 unités de $\Delta E_{2000}$.

2. Produit analogue de viande selon la revendication 1, dans lequel le produit analogue de viande est un steak haché, une boule, un nugget, un filet, une saucisse et/ou un produit haché.

3. Produit analogue de viande selon l'une des revendications précédentes, dans lequel le produit analogue de viande est congelé ou réfrigéré.

4. Produit analogue de viande selon l'une des revendications précédentes, dans lequel le produit analogue de viande est destiné à être frit à la poêle, grillé, rôti, cuit au four, ou frit à l'air, de préférence à la poêle.

5. Produit analogue de viande selon l'une des revendications précédentes, dans lequel l'au moins un colorant est un colorant à base de betterave.

6. Produit analogue de viande selon l'une des revendications précédentes, dans lequel la composition d'au moins un colorant est rouge et/ou brune et comprend des colorants dérivés de la betterave, carotte, radis, rocou, pomme de terre, patate douce, tomate, poivre, caramel, carthame, chou rouge, mélasse, malt, pomme, hibiscus, groseille noire ou rouge, myrtille, thé vert, thé noir, café, pépins de raisin, sureau, canneberge, grenade, mûre, framboise noire ou rouge, fraise, algues, champignon, fonges, curcuma, paprika, rose, tagète ou combinaison de ceux-ci.

7. Produit analogue de viande selon l'une des revendications précédentes, dans lequel au moins 25 % en poids de l'au moins un colorant recouvrent la surface extérieure du produit analogue de viande.

8. Produit analogue de viande selon l'une des revendications précédentes, dans lequel le colorant a été appliqué sur la surface extérieure du produit analogue de viande par pulvérisation, par brumisation, par une application de couleur en cascade, par enrobage, ou par trempage du produit analogue de viande dans une solution colorée.

9. Produit analogue de viande selon l'une des revendications précédentes, dans lequel la protéine végétale est choisie parmi la protéine de fèves de soja, protéine de pois, protéine de lentilles, protéine de tramousses, gluten de blé, ou une combinaison de ceux-ci.

10. Produit analogue de viande selon l'une des revendications précédentes, dans lequel le produit analogue de viande a un rapport entre l'eau totale et la protéine végétale compris entre environ 2,25 et 2,75, de préférence entre environ 2,3 et 2,5.

11. Produit analogue de viande selon l'une des revendications précédentes, dans lequel le liant comprend une cellulose, une fibre, un amidon gélatinisé, un isolat de protéines non texturé, ou une combinaison de ceux-ci.

12. Produit analogue de viande selon l'une des revendications précédentes, dans lequel le produit analogue de viande comprend en outre de la graisse végétale.

13. Produit analogue de viande selon l'une des revendications précédentes, dans lequel le produit analogue de viande comprend des protéines de soja réhydratées, de l'eau, de l'huile végétale, des protéines de blé réhydratées, des acides végétaux, du sel, et des arômes.

14. Produit analogue de viande selon l'une des revendications précédentes, dans lequel le produit analogue de viande a, à l'état cru, un aspect rosé semblable à celui de la viande crue à l'extérieur et un aspect gris-brun semblable à celui de la viande cuite à l'intérieur du produit.

15. Procédé de préparation d'un produit analogue de viande selon l'une des revendications 1 à 14, le procédé comprenant les étapes consistant à :

   a. mélanger la protéine végétale avec de l'eau ;
   b. ajouter le liant, l'arôme éventuel et, éventuellement, une partie des colorants, et le mélange en outre d'une masse ;
   c. éventuellement, refroidir la masse et ajouter la matière grasse broyée, puis mélanger davantage ; dans lequel la protéine végétale est hydratée entre 65 et 85 %, de préférence entre 70 et 80 %, dans le produit analogue de viande ;
   d. former le produit analogue de viande ; et
   e. appliquer au moins une partie du colorant sur au moins une partie de la surface du produit analogue de viande.

Figure 2:

Figure 3:

Figure 1:

| | 1<br>Water : beet : fruit &<br>vegetable brown : Malt<br>40:1:1:0 | | 2<br>Water : beet : fruit &<br>vegetable brown : Malt<br>40:1:1.3:0 | | 3<br>Water : beet : fruit &<br>vegetable brown : Malt<br>40:1:1.3:0.78 | | 4<br>Water : beet : fruit &<br>vegetable brown : Malt<br>40:1:2.5:0 | |
|---|---|---|---|---|---|---|---|---|
| Raw | | | | | | | | |
| | Inside | Outside | Inside | Outside | Inside | Outside | Inside | Outside |
| L* | 50.2 | 36.1 | 51.6 | 35.8 | 52.0 | 38.2 | 51.5 | 35.3 |
| a* | 8.3 | 21.7 | 8.1 | 20.3 | 8.9 | 17.6 | 8.5 | 17.9 |
| b* | 11.9 | 7.3 | 11.5 | 7.4 | 11.8 | 9.9 | 11.8 | 8.7 |
| Raw $\Delta E_{2000}$, outside–inside | 17.6 | | 18.3 | | 15.3 | | 17.4 | |
| Cooked | | | | | | | | |

Figure 5:

| | Organic Red Beet | | | | 4% fat ground beef | |
|---|---|---|---|---|---|---|
| | Dipped | | 0.35% | | | |
| Raw | | | | | | |
| | Inside | Outside | Inside | Outside | Inside | Outside |
| L* | 59.2 | 41.0 | 52.9 | 52.3 | 42.4 | 43.0 |
| a* | 7.5 | 26.3 | 14.7 | 11.5 | 27.3 | 27.6 |
| b* | 15.0 | 9.8 | 9.9 | 6.9 | 13.8 | 14.1 |
| Raw $\Delta E_{2000}$, sample – ground beef | 22.1 | 3.2 | 12.5 | 13.3 | | |
| Cooked (nonstick pan, 165 °F) | | | | | | |
| | Inside | Outside | Inside | Outside | Inside | Outside |
| L* | 53.4 | 31.6 | 49.1 | 29.3 | 51.6 | 28.6 |
| a* | 8.4 | 15.3 | 14.8 | 14.6 | 9.4 | 12.4 |
| b* | 17.7 | 15.8 | 18.4 | 12.7 | 16.0 | 11.0 |
| Cooked $\Delta E_{2000}$, sample – ground beef | 2.5 | 4.0 | 4.9 | 1.8 | | |

Figure 6:

## Figure 7:

| Composition of oil phase (w:w) | 1 canola oil | | 2 Canola oil : shea stearin 8:1 | | 3 Canola oil : shea stearin 20:1 | |
|---|---|---|---|---|---|---|
| Raw | | | | | | |
| | Inside | Outside | Inside | Outside | Inside | Outside |
| L* | 52.7 | 41.4 | 56.0 | 44.6 | 54.4 | 45.8 |
| a* | 7.4 | 15.0 | 6.0 | 20.0 | 6.4 | 19.5 |
| b* | 15.0 | 7.8 | 12.3 | 1.8 | 12.5 | 2.1 |
| Raw $\Delta E_{2000}$, outside–inside | 15.0 | | 19.3 | | 17.3 | |
| Cooked | | | | | | |

Figure 5:

| | Organic Red Beet | | | | 4% fat ground beef | |
|---|---|---|---|---|---|---|
| | Dipped | | 0.35% | | | |
| Raw | | | | | | |
| | Inside | Outside | Inside | Outside | Inside | Outside |
| L* | 59.2 | 41.0 | 52.9 | 52.3 | 42.4 | 43.0 |
| a* | 7.5 | 26.3 | 14.7 | 11.5 | 27.3 | 27.6 |
| b* | 15.0 | 9.8 | 9.9 | 6.9 | 13.8 | 14.1 |
| Raw $\Delta E_{2000}$, sample – ground beef | 22.1 | 3.2 | 12.5 | 13.3 | | |
| Cooked (nonstick pan, 165 °F) | | | | | | |
| | Inside | Outside | Inside | Outside | Inside | Outside |
| L* | 53.4 | 31.6 | 49.1 | 29.3 | 51.6 | 28.6 |
| a* | 8.4 | 15.3 | 14.8 | 14.6 | 9.4 | 12.4 |
| b* | 17.7 | 15.8 | 18.4 | 12.7 | 16.0 | 11.0 |
| Cooked $\Delta E_{2000}$, sample – ground beef | 2.5 | 4.0 | 4.9 | 1.8 | | |

**REFERENCES CITED IN THE DESCRIPTION**

**Patent documents cited in the description**

- WO 2015153666 A1
- WO 2017070303 A1
- WO 2021037574 A1
- WO 2021072318 A1

- WO 2009040150 A
- WO 2010105842 A
- WO 2013092296 A

**Non-patent literature cited in the description**

- Improvement to industrial color-difference evaluation. Commission Internationale de l'Eclairage. CIE Publication, 2001, vol. 142
- **MARTIN HABEKOST**. Which color differencing equation should be used. *International Circular of Graphic Education And Research*, 2013, vol. 6, 20-33

- Colour Difference Evaluation. **M. MELGOSA et al.** Advanced Color Image Processing and Analysis. Springer Science + Business Media, 2013, 59-79
- Colorimetry. International Commission on Illumination (abbreviated CIE) in 1976. CIE Publication, 2004, vol. 15